# FASCICULE DE BREVET EUROPEEN

(11) **EP 3 800 874 B1**
(45) Date de publication et mention de la délivrance du brevet: **29.01.2025**
(21) Numéro de dépôt: 20191066.8
(22) Date de dépôt: 14.08.2020
(51) Int. Cl.: H04M 1/663, H04M 1/57, H04M 3/436, H04M 3/42, H04M 3/54

(54) **PROCÉDÉ ET DISPOSITIF DE REDIRECTION D'UNE REQUÊTE DE COMMUNICATION**
VERFAHREN UND VORRICHTUNG ZUR UMLEITUNG EINER KOMMUNIKATIONSANFRAGE
METHOD AND DEVICE FOR REDIRECTING A COMMUNICATION REQUEST

(30) Priorité: 01.10.2019 FR 1910869
(43) Date de publication de la demande: 07.04.2021
(73) Titulaire: Orange, 92130 Issy-les-Moulineaux (FR)
(72) Inventeur: CASEAU, François, 92326 CHÂTILLON CEDEX (FR); BINARD, Fabien, 92326 CHÂTILLON CEDEX (FR)

(56) Documents cités:
- CN-A- 109 348 036
- US-A1- 2018 302 513
- US-A1- 2019 158 663
- US-A1- 2020 213 443
- US-B1- 9 277 049

## Description

### 1. Domaine de l'invention

L'invention se situe dans le domaine des communications de personne à personne.

### 2. Etat de la technique antérieure

Avec la téléphonie basée IP, le coût par appel est devenu minime ou nul pour l'appelant, hormis le prix de l'accès au réseau qu'il doit payer, par exemple sous forme d'abonnement ou de forfait limité dans le temps.

Une conséquence particulièrement néfaste de l'absence de coût réel d'un appel est la multiplication des appels non sollicités reçus par les utilisateurs sur leur terminal de communications personnel.

Des solutions sont connues pour faire face à ce phénomène. Par exemple, une liste est consultée par le terminal appelé, ou par un équipement du réseau auquel est connecté le terminal appelé, pour déterminer si l'appelant est autorisé ou non à entrer en communication avec l'appelé. On appelle liste noire une liste qui contient des identifiants d'appelants non autorisés, et liste blanche une liste qui contient des identifiants d'appelants autorisés.

L'état de la technique comprend les documents suivants :
- la demande de brevet CN109348036 qui concerne un procédé et un système pour la gestion d'appels indésirés fondés sur un mécanisme d'interface homme-machine intelligente de questions-réponses ;
- le brevet US9277049 qui concerne des systèmes et procédés pour l'authentification des numéros appelants, des destinations d'appels et la détection de transferts d'appels ;
- la demande de brevet US20180302513A1 qui concerne un procédé pour bloquer des appels indésirés ;
- la demande de brevet US20190158663A1 qui concerne un système de réception d'appels automatiques et de détermination de préférences associées à l'identité du numéro appelé et de détermination d'une condition relative à l'acceptance des appels automatiques ;
- la demande de brevet US20200213443A1 qui concerne des techniques de fournitures d'enregistrement pour des appels téléphoniques transférés.

Un problème des listes noires est qu'il est très facile pour un appelant de modifier ses identifiants et d'échapper à une liste noire.

Un problème des listes blanches est qu'un appelé doit renseigner à l'avance les identifiants de tous les interlocuteurs qu'il souhaite autoriser. Certains systèmes basés sur liste blanche offrent une interface de gestion de la liste, par exemple une interface web, ou une interface vocale via un serveur vocal interactif, permettant à un utilisateur d'ajouter et retirer des identifiants de la liste blanche. Mais la gestion d'une liste blanche reste une opération compliquée, particulièrement pour une personne âgée, d'autant plus vulnérable face au démarchage téléphonique.

Un but de l'invention est de remédier à ces inconvénients de l'état de la technique.

### 3. Exposé de l'invention

L'invention vient améliorer la situation à l'aide d'un procédé de redirection d'une requête de communication émise par un terminal dit terminal appelant, à destination d'un terminal dit terminal appelé, un identifiant du terminal appelant étant absent d'une liste d'identifiants de terminaux appelants pour lesquels l'établissement d'une communication avec le terminal appelé est autorisé ou interdit, respectivement dite liste blanche ou liste noire, le procédé comprenant :
- la redirection de la requête de communication vers un terminal d'utilisateur, distinct du terminal appelé, dit terminal de redirection, le terminal de redirection étant un terminal choisi à l'avance par l'utilisateur du terminal appelé, distinct du terminal appelé,
- la réception d'un message d'instruction, comprenant l'identifiant du terminal appelant et une instruction relative à la liste blanche ou à la liste noire,
- en fonction de l'instruction reçue, l'ajout de l'identifiant du terminal appelant à la liste blanche ou à la liste noire.

Selon l'invention, toutes les requêtes de communication, ou appels, émanant d'un terminal appelant inconnu du terminal appelé, ne sont pas établies sur le terminal appelé, mais sont traités par un équipement de réseau ou par une application logicielle installée sur le terminal appelé, communément dénommée application mobile. Dans les deux cas, que le traitement soit effectué par un équipement distinct du terminal appelé, ou par une application mobile intégrée dans celui-ci, le terme de plateforme sera utilisé dans la suite pour désigner l'équipement ou l'application mobile. Un équipement distinct est par exemple la plateforme de services AliasNumber d'Orange, auprès de laquelle l'utilisateur du terminal appelé doit préalablement enregistrer son terminal.

Dans un système basé sur liste blanche ou sur liste noire, le traitement d'un appel provenant d'un numéro absent de ces listes n'est pas prévu. Il est soit rejeté, soit accepté, soit dévié vers un serveur vocal. Pour être ajouté sur la liste blanche ou sur la liste noire, le numéro doit être préalablement connu de la personne qui gère les listes, qui est par exemple l'utilisateur du numéro appelé, ou un tiers mandaté par lui. Par conséquent, un interlocuteur qui est légitimement connu de l'appelé, s'il appelle pour la première fois depuis un nouveau numéro, ne sera pas autorisé et devra trouver un moyen alternatif en dehors du système de communication utilisé, pour contacter l'appelé afin qu'il ajoute son nouveau numéro sur la liste blanche. L'appel provenant d'un nouveau numéro n'est donc pas établi, mais grâce au procédé proposé, l'ajout à la liste blanche de ce numéro peut être réalisé sans action particulière de la part de l'appelant et sans recours à un système de communication autre que celui utilisé par le procédé. En effet, le procédé, après avoir intercepté l'appel, prévient une personne, qui peut être la personne appelée ou non, à l'aide d'un terminal de redirection qui n'est pas le terminal appelé. La personne utilisant le terminal de redirection peut alors décider de déclencher l'ajout du numéro à la liste blanche. De façon correspondante pour le cas d'un appel non souhaité par l'appelé, le procédé proposé permet l'ajout du numéro appelant dans une liste noire, sans aucune action particulière de la part du terminal appelé.

Selon l'invention, le message d'instruction est reçu en provenance du terminal de redirection.

C'est le cas le plus simple, où le terminal de redirection est utilisé à la fois pour recevoir l'appel et ensuite notifier la plateforme. L'identifiant de ce terminal doit bien sûr être préalablement communiqué au système par l'utilisateur du terminal appelé. Cet utilisateur peut par exemple préférer gérer la liste blanche/noire de son terminal de ligne téléphonique fixe à l'aire de son terminal de ligne cellulaire (en d'autres termes, son smartphone) qui possède une interface plus ergonomique.

Selon un aspect du procédé de redirection, le terminal de redirection est sélectionné parmi un groupe de terminaux de redirection en fonction de critères prédéterminés.

Ainsi, des messages de notification relatifs à des appels de terminaux inconnus peuvent être émis vers des terminaux différents selon des critères comme l'heure de la journée, le jour du mois, ou encore le type d'identifiant du terminal appelant.

Par exemple, si le terminal appelé est un terminal fixe, ces messages de notification peuvent être émis vers ce terminal lorsque son utilisateur est à la maison (le soir et en week-end), et vers un terminal mobile de l'utilisateur lorsqu'il n'y est pas (pendant les heures de travail).

En guise d'autre exemple, les messages de notification peuvent être par défaut émis vers le terminal de l'appelé lui-même, sauf si le numéro appelant indique que l'appel provient de l'étranger, auquel cas le message de notification peut être émis vers le terminal associé d'un tiers, présélectionné car il parle une langue étrangère.

Selon un aspect le procédé de redirection, comprend une étape préalable d'obtention d'un identifiant du terminal de redirection.

Ainsi, l'utilisateur du terminal appelé peut indiquer lui-même vers quel terminal le système doit émettre les messages de notification relatifs à des appels de terminaux inconnus. Avantageusement, il peut donc aussi révoquer à tout moment un mandat préalablement donné à un tiers, en indiquant le numéro du terminal d'un autre tiers, ou le numéro d'un de ses propres terminaux.

Selon un aspect du procédé de redirection, le terminal de redirection est le terminal d'une tierce personne mandatée par l'utilisateur du terminal appelé.

Ainsi, ce n'est pas l'utilisateur du terminal appelé lui-même qui est dérangé par les messages de notification, et qui doit décider ou non d'ajouter dans sa liste blanche/noire l'identifiant des terminaux appelants. En effet, certains utilisateurs, par exemple des personnes âgées, ne souhaitent pas ou ne peuvent pas gérer eux-mêmes la liste blanche/noire et son interface utilisateur. Grâce à cet aspect, l'utilisateur du terminal appelé peut mandater une personne de confiance pour le faire à sa place. Il suffit que l'identifiant du terminal de cette tierce personne soit préalablement donnée au système par la personne appelée.

Les différents aspects du procédé de redirection qui viennent d'être décrits peuvent être mis en oeuvre indépendamment les uns des autres ou en combinaison les uns avec les autres.

Selon un aspect d'un second mode de réalisation du procédé de redirection, ne faisant pas parti de l'invention, le terminal de redirection n'est pas un terminal d'utilisateur mais est un serveur vocal, et le procédé comprend en outre, suite à la redirection et préalablement à la réception du message d'instruction, l'émission d'un message de notification vers un autre terminal associé au terminal appelé, dit terminal associé, distinct à la fois du terminal appelé et du terminal de redirection, le message de notification comprenant au moins une information relative à la redirection. Dans cet aspect, le message d'instruction reçu est émis par le terminal associé.

Ainsi, l'utilisateur du terminal associé, qui peut être, ou non, le même que celui du terminal appelé, sait qu'un appel pour le terminal appelé et émanant d'un terminal inconnu a été redirigé sur le serveur vocal. Grâce au message de notification reçu sur son terminal associé, il peut alors consulter ce serveur vocal, c'est-à-dire écouter un message vocal ou lire un message textuel éventuellement laissé par l'appelant, ou connaitre toute autre information que le serveur vocal a récolté sur l'appelant ou sur le terminal appelant, si par exemple le serveur vocal est interactif. Dans une variante, le message de notification peut même déclencher une mise en relation directe entre le terminal associé et le serveur vocal.

L'utilisation d'un serveur vocal comme terminal de redirection présente de multiples avantages. Par exemple, la requête de communication émanant de l'interlocuteur appelant ne reste pas totalement sans réponse pour lui. De plus, grâce au serveur vocal, l'interlocuteur appelant peut être informé qu'il n'est pas connu et n'est pas autorisé à appeler terminal demandé, et/ou informé de la ou des solutions qui existent pour qu'il soit autorisé à le faire. Alternativement, il peut simplement être invité à déposer un message, sans autre explication.

Selon un aspect du second mode de réalisation du procédé de redirection, le message de notification comprend au moins une information obtenue par le serveur vocal.

Ainsi, non seulement l'utilisateur du terminal associé est notifié de l'occurrence d'un appel venant d'un terminal inconnu, mais le message de notification est enrichi d'une information lui permettant immédiatement de décider ou non l'ajout dans la liste blanche/noire. L'utilisateur du terminal associé peut donc éviter de consulter le serveur vocal pour prendre sa décision, ce qui lui économise du temps. Sa décision est ensuite transposée dans le message d'instruction émis par le terminal associé et reçu par le système. On comprend que l'ajout dans la liste blanche/noire peut être très rapide, très peu de temps après la requête de communication initiale provenant du terminal appelant.

Selon un aspect du second mode de réalisation du procédé de redirection, le terminal associé est le terminal d'une tierce personne mandatée par l'utilisateur du terminal appelé.

Ainsi, ce n'est pas l'utilisateur du terminal appelé lui-même qui est dérangé, et qui décide ou non d'ajouter dans sa liste blanche/noire l'identifiant du terminal appelant. En effet, certains utilisateurs, par exemple des personnes âgées, ne souhaitent pas ou ne peuvent pas gérer eux-mêmes la liste blanche et son interface utilisateur. Grâce à cet aspect, l'utilisateur du terminal appelé peut mandater une personne de confiance pour le faire à sa place. Il suffit que l'identifiant du terminal de cette tierce personne soit préalablement donnée au système par la personne appelée.

Selon un aspect du second mode de réalisation du procédé de redirection, le terminal associé est sélectionné parmi un groupe de terminaux associés en fonction de critères prédéterminés.

Ainsi, les messages de notification relatives à un appel d'un terminal inconnu peuvent être émis vers des terminaux différents selon des critères comme l'heure de la journée, le jour du mois, ou encore le type d'identifiant du terminal appelant.

Par exemple, si le terminal appelé est un terminal fixe, les messages de notification peuvent être émis vers ce terminal lorsque son utilisateur est à la maison (le soir et en week-end), et vers un terminal mobile de l'utilisateur lorsqu'il n'y est pas (pendant les heures de travail).

En guise d'autre exemple, les messages de notification peuvent être par défaut émis vers le terminal de l'appelé lui-même, sauf si le numéro appelant indique que l'appel provient de l'étranger, auquel cas le message de notification peut être émis vers le terminal associé d'un tiers, présélectionné car il parle une langue étrangère.

Selon un aspect du second mode de réalisation, le procédé de redirection comprend une étape préalable de réception d'un identifiant du terminal associé.

Ainsi, l'utilisateur du terminal appelé peut indiquer lui-même vers quel terminal le système doit émettre le message de notification relatif à un appel d'un terminal inconnu. Avantageusement, il peut donc aussi révoquer à tout moment un mandat préalablement donné à un tiers, en indiquant le numéro du terminal d'un autre tiers, ou le numéro d'un de ses propres terminaux.

Les différents aspects du second mode de réalisation du procédé de redirection qui viennent d'être décrits peuvent être mis en œuvre indépendamment les uns des autres ou en combinaison les uns avec les autres.

Selon un autre aspect, le procédé de redirection comprend l'émission vers le terminal appelant d'une notification relative à l'ajout à la liste blanche ou à la liste noire de l'identifiant du terminal appelant.

Ainsi, l'interlocuteur appelant aura la certitude que son prochain appel vers le terminal appelé sera soit établi, soit rejeté, et ceci sans que l'appelé ait besoin de contacter l'appelant pour l'en informer. Dans le cas liste blanche, l'appelant n'a donc pas besoin de contacter l'appelé, par un moyen alternatif, pour savoir à partir de quand il sera autorisé à l'appeler de son nouveau numéro.

L'invention vise aussi un procédé de qualification d'une requête de communication émise par un terminal dit terminal appelant, à destination d'un terminal dit terminal appelé, un identifiant du terminal appelant étant absent d'une liste d'identifiants de terminaux appelants pour lesquels l'établissement d'une communication avec le terminal appelé est autorisé ou interdit, respectivement dite liste blanche ou liste noire, la communication étant établie par une plateforme de redirection entre le terminal appelant et un terminal d'utilisateur, distinct du terminal appelé, dit terminal de redirection, après redirection de la requête vers le terminal de redirection, le procédé étant mis en œuvre par le terminal de redirection qui est un terminal choisi à l'avance par l'utilisateur du terminal appelé, le procédé comprenant :
- une obtention d'un identifiant du terminal appelé,
- une décision relative à l'ajout de l'identifiant du terminal appelant à la liste blanche ou à la liste noire,
- l'émission d'un message d'instruction, comprenant l'identifiant du terminal appelant et une instruction relative à la liste blanche ou à la liste noire.

Ainsi, ce n'est pas l'utilisateur du terminal appelé qui prend la décision de qualifier un appel émanant d'un utilisateur qu'il ne connait pas, c'est-à-dire d'autoriser ou non les appels futurs de l'appelant vers l'appelé. C'est l'utilisateur du terminal de redirection, qui peut par exemple être un tiers de confiance, qui procède à cette qualification Ceci est très utile par exemple lorsque que la personne appelée est une personne vulnérable, par l'âge ou par le handicap.

Selon l'invention, le procédé de qualification d'une requête de communication comprend en outre l'obtention d'un identifiant du terminal appelé.

Ainsi, l'utilisateur du terminal de redirection n'a pas besoin de préciser manuellement dans le message d'instruction pour quel terminal s'applique les listes blanche ou noire. L'invention concerne aussi un dispositif de redirection dans une plateforme de redirection d'une requête de communication émise par un terminal dit terminal appelant, à destination d'un terminal dit terminal appelé, un identifiant du terminal appelant étant absent d'une liste d'identifiants de terminaux appelants pour lesquels l'établissement d'une communication avec le terminal appelé est autorisé ou interdit, respectivement dite liste blanche ou liste noire, le dispositif comprenant un récepteur, un émetteur, un processeur et une mémoire couplée au processeur avec des instructions destinées à être exécutées par le processeur pour :
- la redirection de la requête de communication vers un terminal associé au terminal appelé, distinct du terminal appelé, dit terminal de redirection, le terminal de redirection étant un terminal choisi à l'avance par l'utilisateur du terminal appelé, distinct du terminal appelé,
- la réception en provenance du terminal de redirection d'un message d'instruction, comprenant l'identifiant du terminal appelant et une instruction relative à la liste blanche ou à la liste noire,
- en fonction de l'instruction reçue, l'ajout de l'identifiant du terminal appelant à la liste blanche ou à la liste noire.

Ce dispositif, apte à mettre en œuvre dans tous ses modes de réalisation le procédé de redirection qui vient d'être décrit, peut être mis en œuvre dans une application mobile installée sur le terminal appelé, ou dans un équipement distinct tel qu'une plateforme de gestion d'identifiants secondaires, telle que par exemple la plateforme AliasNumber d'Orange.

L'invention concerne également un système comprenant une plateforme de redirection et un terminal de redirection de qualification d'une requête de communication émise par un terminal dit terminal appelant, à destination d'un terminal dit terminal appelé, un identifiant du terminal appelant étant absent d'une liste d'identifiants de terminaux appelants pour lesquels l'établissement d'une communication avec le terminal appelé est autorisé ou interdit, respectivement dite liste blanche ou liste noire, la communication étant établie par la plateforme de redirection entre le terminal appelant et un terminal d'utilisateur, distinct du terminal appelé, à savoir ledit terminal de redirection, choisi à l'avance par l'utilisateur du terminal appelé, le terminal de redirection comprenant un récepteur, un émetteur, un processeur et une mémoire couplée au processeur avec des instructions destinées à être exécutées par le processeur pour :
- l'obtention d'un identifiant du terminal appelé,
- la décision relative à l'ajout de l'identifiant du terminal appelant à la liste blanche ou à la liste noire,
- l'émission d'un message d'instruction vers la plateforme de redirection, comprenant l'identifiant du terminal appelant et une instruction relative à la décision.

Ce dispositif, apte à mettre en œuvre dans tous ses modes de réalisation le procédé de qualification qui vient d'être décrit, peut être mis en œuvre dans une application mobile installée sur le terminal de redirection.

Un autre aspect concerne encore une plateforme de gestion d'identifiants secondaires, apte à être connectée à un réseau de communication téléphonique, configurée pour gérer une communication dans ledit réseau de communication initiée entre un terminal appelant et un terminal appelé, ledit terminal appelé étant identifié par un identifiant primaire et associé à un identifiant secondaire distinct de l'identifiant primaire et correspondant à un terminal de redirection distinct du terminal appelé, la plateforme établissant ladite communication avec le terminal de redirection en présentant au terminal appelant l'identifiant primaire du terminal appelé sans présenter l'identifiant secondaire, ladite plateforme étant caractérisée en ce qu'elle comprend en outre un dispositif de redirection d'une requête de communication tel que celui qui vient d'être décrit.

Dans le cas d'un appel indésirable dans le premier mode de réalisation de l'invention, il n'y a ainsi aucun risque que le terminal appelant récupère, pour un usage futur non autorisé, un identifiant d'utilisateur du terminal de redirection avec lequel l'appel est établi.

L'invention concerne aussi des programmes d'ordinateur comprenant des instructions qui, lorsque ces instructions sont exécutées par un processeur, conduisent celui-ci à mettre en œuvre les étapes du procédé de redirection d'une requête de communication, ou le procédé de qualification d'une requête de communication qui viennent d'être décrits.

L'invention vise aussi des supports d'informations lisibles par un ordinateur, et comportant des instructions d'un programme d'ordinateur tel que mentionné ci-dessus. Le terme ordinateur comprend toute machine comprenant un ou plusieurs processeurs, tel que par exemple un téléphone mobile dit intelligent (smartphone en anglais), ou un serveur informatique.

Les programmes mentionnés ci-dessus peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Les supports d'informations mentionnés ci-dessus peuvent être n'importe quelle entité ou dispositif capable de stocker le programme. Par exemple, un support peut comporter un moyen de stockage, tel qu'une ROM, par exemple un CD ROM ou une ROM de circuit microélectronique, ou encore un moyen d'enregistrement magnétique.

Un tel moyen de stockage peut par exemple être un disque dur, une mémoire flash, etc. D'autre part, un support d'informations peut être un support transmissible tel qu'un signal électrique ou optique, qui peut être acheminé via un câble électrique ou optique, par radio ou par d'autres moyens. Un programme selon l'invention peut être en particulier téléchargé sur un réseau de type Internet.

Alternativement, un support d'informations peut être un circuit intégré dans lequel un programme est incorporé, le circuit étant adapté pour exécuter ou pour être utilisé dans l'exécution du procédé en question.

### 4. Présentation des figures

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
[Fig 1] La figure 1 présente de façon schématique des terminaux d'utilisateurs connectés à une plateforme de redirection mettant en œuvre les procédés de redirection et de qualification d'une requête de communication, selon l'invention;
[Fig 2] La figure 2 illustre un premier exemple de flux de messages échangés entre les terminaux, un réseau de communication et la plateforme de redirection, selon un premier mode de réalisation de l'invention;
[Fig 3] La figure 3 illustre un second exemple de flux de messages échangés entre les terminaux, un réseau de communication et la plateforme de redirection, selon un second mode de réalisation de l'invention;
[Fig 4] La figure 4 représente de façon schématique un exemple de structure matérielle d'un dispositif de redirection d'une requête de communication selon l'invention ;
[Fig 5] La figure 5 représente de façon schématique un exemple de structure matérielle d'un dispositif de qualification d'une requête de communication selon l'invention.

### 5. Description détaillée d'au moins un mode de réalisation de l'invention

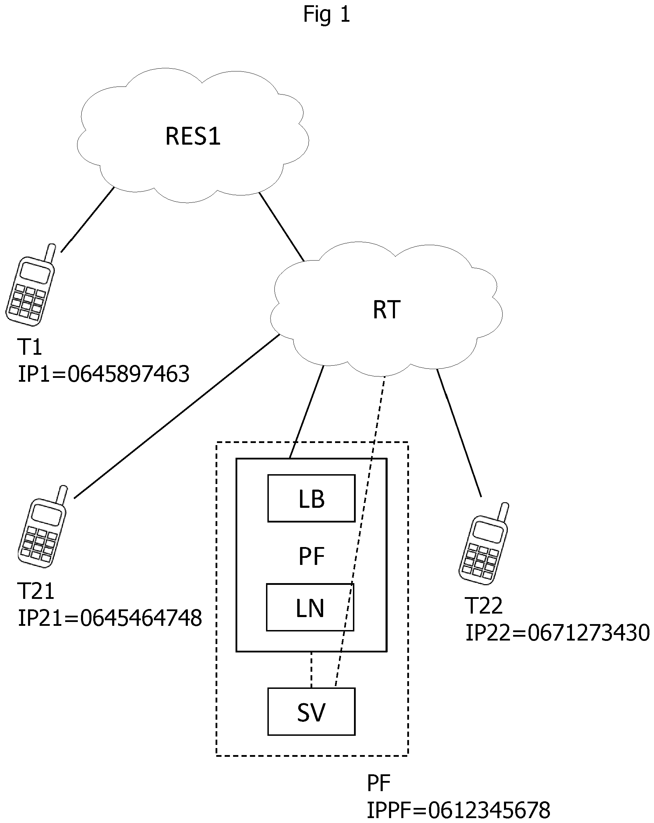

En relation avec la **figure 1** on considère un réseau de communication RT d'un opérateur de téléphonie et un équipement terminal T1 apte à se connecter audit réseau. Dans l'exemple présenté, le terminal T1 est un téléphone mobile, par exemple de type téléphone intelligent (pour « smartphone » en anglais). Le terminal T1 possède une carte SIM associée à un identifiant d'abonné unique IMSI qui permet de l'identifier dans un réseau de rattachement ou d'accès RES1 pour lequel son utilisateur, qu'on appellera Alice dans la suite, a souscrit un abonnement auprès de l'opérateur de ce réseau. Il s'agit par réseau cellulaire par exemple de type GSM (pour « Global System for Mobile Communications », en anglais) ou UMTS (pour « Universal Mobile Telecommunications System », en anglais), LTE (« pour Long Term Evolution », en anglais) ou conforme à une génération ultérieure de la norme 3GPP (3rd Generation Partnership Project », en anglais).

L'identifiant IP1 correspond au numéro de téléphone permettant de joindre l'utilisateur du terminal T1. Dans l'exemple de la figure 1, IP1 correspond au numéro de mobile 0645897463.

Bien sûr, l'invention n'est pas limitée à cet exemple particulier. Le terminal T1 d'Alice peut aussi être fixe et rattaché à un réseau privé, lui-même connecté par un autocommutateur privé PABX au réseau de téléphonie RT ou encore être rattaché à un réseau ADSL ou FTTH (pour « Fiber To The Home », en anglais).

L'identifiant IP21 correspond au numéro de téléphone permettant de joindre l'utilisateur du terminal T21. Dans l'exemple de la figure 1, IP21 correspond au numéro de mobile 0645464748. Le terminal T21 de Bob peut être attaché au même réseau que celui d'Alice, au réseau RT, ou à tout autre réseau. Dans l'exemple de la figure 1, le terminal T21 est attaché au réseau RT. Les terminaux T1 et T21 pourraient aussi bien être attachés au même réseau RES1, ou RT.

On suppose qu'Alice souhaite appeler le numéro de téléphone IP21.

On suppose que Bob a souscrit, pour ce numéro IP21, à un service de redirection d'appel, qui lui permet de configurer à l'avance une ou plusieurs listes de numéros appelants autorisés et/ou interdits. La liste blanche LB est une liste de numéros appelant autorisés par Bob, et la liste noire LN une liste de numéros appelants interdits par Bob.

Dans la suite, on considère une plateforme PF de gestion d'un tel service. Cette plateforme est connectée au réseau de téléphonie RT. Si cette plateforme PF est dans un équipement distinct du terminal appelé T21, elle dispose d'un identifiant ou numéro de service IPPF et réalise l'interface entre les utilisateurs du service de redirection et le réseau de téléphonie RT. Une telle plateforme, typiquement gérée par l'opérateur du réseau RT, est agencée pour gérer les requêtes d'établissement d'appel reçues par les terminaux d'utilisateurs comme Bob. Lorsque Bob souscrit au service, le réseau RT est configuré pour effectuer une première redirection vers la plateforme PF de toutes les requêtes de communications à destination du terminal T21 de Bob. Dans le cas où la plateforme PF est installée dans le terminal T21, le réseau RT n'a pas besoin d'être préconfiguré pour effectuer la redirection.

Les cas où le numéro IP1 d'Alice est présent dans la liste blanche LB ou dans la liste noire LN sont connus et ne seront pas décrits plus en détail.

Le cas qui est développé ci-après est celui où le numéro IP1 d'Alice est absent de toutes les listes, blanche ou noire. Dans ce cas, la requête de communication du terminal T1 d'Alice subit une seconde redirection, vers un terminal choisi à l'avance par Bob, distinct du terminal T21 de Bob.

Selon l'invention, ce terminal de redirection est un terminal d'utilisateur T22 tel qu'un téléphone.

Dans un second mode de réalisation, ne faisant pas parti de l'invention ce terminal de redirection est un serveur vocal SV. tel qu'un serveur de messagerie, interactif ou non.

Le terminal de redirection T22 peut être un autre terminal de Bob, ou un terminal d'une tierce personne à qui Bob fait confiance et/ou a donné mandat pour gérer au moins en partie la réception de ses appels. L'identifiant IP22 correspond au numéro de téléphone permettant de joindre l'utilisateur du terminal T22. Dans l'exemple de la figure 1, IP22 correspond au numéro de mobile 0671273430 et le terminal T22 est attaché au réseau RT, mais il pourrait tout aussi bien être attaché à un autre réseau comme le réseau RES1. Dans le second mode de réalisation, le terminal de redirection n'est pas le terminal T22 (c'est le serveur SV qui est le terminal de redirection), mais ce terminal T22 peut être choisi par Bob pour recevoir un message de notification de la part de la plateforme PF, dont le but est de signaler la réception par le serveur SV d'un appel inconnu. Appel inconnu signifie ici que le numéro de terminal d'appelant ne se trouve ni dans une liste blanche, ni dans une liste noire, ce qui est le cas de l'appel d'Alice dans nos deux modes de réalisation.

Le serveur SV peut être distinct de la plateforme PF et être attaché séparément au réseau RT, ou il peut être intégré à la plateforme PF en tant qu'une des fonctionnalités de la plateforme PF.

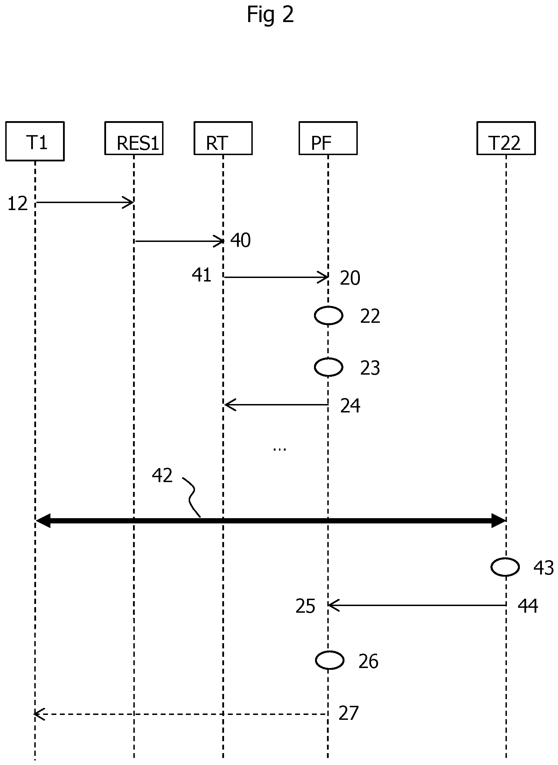

En relation avec la **figure 2****,** on décrit maintenant les messages échangés entre le terminal T1 d'Alice, le réseau de téléphonie RT, la plateforme PF, et le terminal de redirection T22, selon un premier mode de réalisation de l'invention.

En 12, le premier terminal T1 émet à destination du réseau de téléphonie RT, via le réseau RES1, une demande d'établissement d'une communication, ou requête de communication, avec un terminal identifié par le numéro IP21. Typiquement, il s'agit d'un message classique de signalisation Circuit Switched ou PSTN (pour « Public Switch Telephone Network », en anglais). Ce message comprend comme numéro d'appelant l'identifiant IP1 d'Alice, et comme numéro d'appelé l'identifiant IP21, qui se trouve être celui du terminal T21 de Bob. Un tel message SIP est par exemple :
INVITE
From=IP1
To=IP21
PAI=IP1

Si la plateforme PF est intégrée dans le terminal T21, c'est cette requête qui est reçue en 20.

Si la plateforme PF est un équipement distinct du terminal T21 et qui est adressable dans le réseau RT à l'aide d'un identifiant IPPF, et si le réseau RT a été préconfiguré pour cela, à réception de cette requête en 40, le réseau de téléphonie RT identifie que l'appel à établir implique une redirection programmée vers la plateforme PF, ce qui déclenche en 41 la transmission à la plateforme PF, d'un message de création d'une session voix de type SIP INVITE, comprenant comme numéro d'appelé l'identifiant IPPF de la plateforme PF, comme numéro d'appelant l'identifiant IP1 d'Alice et comme numéro de transfert l'identifiant IP21 de Bob. Un tel message SIP est par exemple:
INVITE
From=IP1
To=IPPF
PAI=IP1
Diversion=IP21

A réception de l'un ou l'autre de ces messages en 20 (selon le cas), la plateforme PF en extrait l'identifiant IP21, et obtient une ou plusieurs listes associées à l'identifiant IP21. Par exemple, il s'agit d'une liste dite "blanche" LB et d'une liste dite "noire" LN, comprenant des identifiants de terminaux respectivement autorisés, ou non autorisés, à établir une session de communication avec le terminal T21.

Dans d'autres applications de l'invention, une seule de ces 2 listes peut être mise en œuvre pour l'identifiant IP21.

La plateforme PF déclenche en 22 la vérification dans la liste LB et dans la liste LN de la présence de l'identifiant IP1 d'Alice. De façon connue, si cet identifiant est présent dans la liste LB, la plateforme PF émet une commande d'ouverture de session à destination du terminal T21 de Bob. Egalement de façon connue, si cet identifiant est présent dans la liste LN, la plateforme PF rejette la requête de communication du terminal T1 d'Alice. Ces deux cas ne sont pas illustrés.

Nous nous intéressons maintenant au cas où l'identifiant IP1 d'Alice n'est présent dans aucune des listes, LB ou LN. Dans ce cas, l'appel d'Alice n'est ni transféré vers Bob, ni rejeté. En effet, la plateforme PF détermine en 23 qu'un terminal de redirection T22 a été préalablement associé au terminal T21 de Bob, afin d'y rediriger toute requête de communication émanant d'un identifiant inconnu, c'est-à-dire présent ni dans la liste LB, ni dans la liste LN.

En 24, la plateforme PF émet une commande d'ouverture d'une session d'appel à destination du terminal de redirection T22, associé au terminal T21 de Bob, via un deuxième canal de communication reliant le terminal T22 au réseau RT, ladite commande comprenant un identifiant d'appelé IP22 correspondant au terminal T22 et l'identifiant d'appelant IP1 correspondant à l'identifiant du terminal T1 d'Alice. Pour ce faire, elle émet un message SIP de type INVITE à destination du réseau de téléphonie RT. Un tel message SIP est par exemple:
INVITE
From=IP1
To=IP22
PAI=IP1

On suppose que l'utilisateur du terminal T22 décroche et que la session de communication avec le terminal T1 est établie. Les étapes suivant l'étape 24, menant à l'établissement 42 de la session de communication entre les terminaux T1 et T22 sont connues n'ont besoin d'être ni décrites ni illustrées. Optionnellement, le terminal T22 obtient l'identifiant IP21 du terminal T21, soit dans le message SIP, soit séparément dans un autre message tel que par exemple un message http (non illustré) émis par la plateforme PF vers le terminal T22. Ceci permet d'indiquer au terminal T22 pour quel terminal doit être effectué la qualification de la session de communication avec le terminal T1. Ainsi l'utilisateur du terminal T22 n'a pas à le préciser manuellement. L'identifiant IP22 du terminal de redirection T22 n'est jamais visible ni récupérable par le terminal appelant T1, que ce soit durant l'étape de redirection 24 ou durant la session 42 lorsqu'elle est établie.

L'utilisateur du terminal T22, qui peut être Bob ou une autre personne mandatée par Bob, à la fin de la session de communication, ou au cours de celle-ci, qualifie la session, c'est-à-dire décide, en 43, que l'appel d'Alice vers le terminal T21 de Bob aurait dû être autorisé, ou bloqué.

Le terminal T22 insère dans un message d'instruction des informations représentatives de cette décision, dans le cadre d'une interaction de l'utilisateur du terminal T22 avec son interface homme-machine. Par exemple, un tel message d'instruction est une requête http post de type "ajout de IP1 à LB", ou "ajout de IP1 à LN", émise par l'application logicielle du terminal T22 dédiée à la mise en œuvre du service de redirection. Une telle application est configurée pour échanger avec la plateforme PF les messages nécessaires à la mise en œuvre du service de redirection. Le message d'instruction est émis en 44 par cette application et comprend des informations obtenues lors de l'interaction entre le terminal T22 et son utilisateur au travers de l'interface homme-machine. Afin que la bonne liste à mettre à jour soit identifiable parmi toutes les listes gérées par la plateforme PF pour tous ses utilisateurs, le message d'instruction comprend également l'identifiant IP21 du terminal de Bob, en plus de l'identifiant IP1 d'Alice, et d'une des deux indications LB ou LN. De plus, le message d'instruction peut également comprendre des informations permettant à la plateforme PF d'authentifier le terminal T22, afin d'éviter qu'un terminal non autorisé puisse modifier les listes blanche ou noire du terminal T21.

Lors d'une étape 25 la plateforme PF reçoit le message d'instruction émis par le terminal T22.

Lors d'une étape 26, selon que le message d'instruction concerne la liste blanche ou la liste noire, la plateforme PF ajoute l'identifiant IP1 d'Alice dans la liste LB ou dans la liste LN associée au terminal T21. Ainsi, lors d'une tentative ultérieure d'Alice de contacter Bob sur son terminal T21, l'appel sera soit autorisé sans délai, soit rejeté complètement. Lors d'une étape 27 optionnelle, la plateforme PF émet vers le terminal T1 d'Alice une notification annonçant son ajout dans la liste en question, par exemple par SMS. Ainsi, si Alice apprend qu'elle a été mise en liste blanche, elle peut rapidement retenter d'appeler le terminal T21 de Bob, sans être redirigée vers le terminal de redirection T22 associé au terminal T21. Similairement, si Alice apprend qu'elle a été mise en liste noire, elle ne retentera plus d'appeler le terminal T21 de Bob.

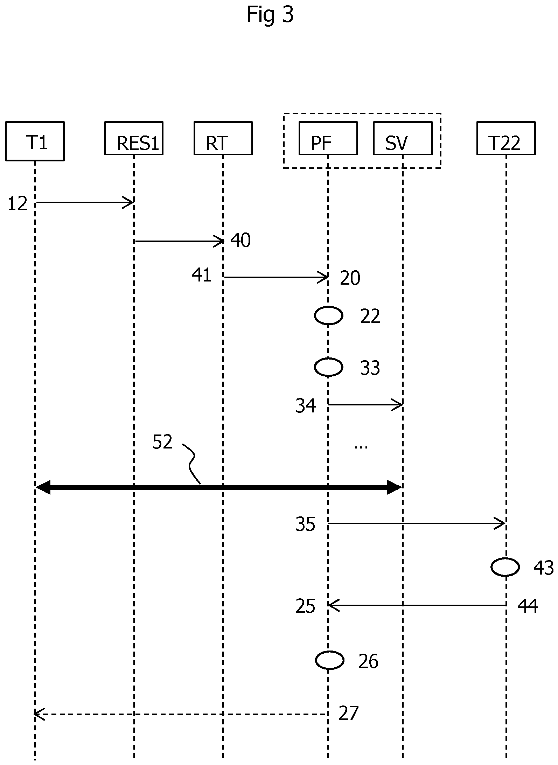

En relation avec la **figure 3****,** on décrit maintenant les messages échangés entre le terminal T1 d'Alice, le réseau de téléphonie RT, la plateforme PF, le serveur SV et le terminal de redirection T22, selon un second mode de réalisation de l'invention.

Ce second mode de réalisation ne diffère pas du premier mode par les étapes 12, 40, 41, 20 et 22, qui ne seront pas décrites à nouveau.

Après la vérification faite en 22 que l'identifiant IP1 du terminal 21 d'Alice est bien absent de la liste LB ou de la liste LN, la plateforme PF détermine en 33 que le terminal de redirection qui a été préalablement associé au terminal T21 de Bob est le serveur vocal SV, et non pas un terminal d'utilisateur. Toute requête de communication émanant d'un identifiant inconnu, c'est-à-dire présent ni dans la liste LB, ni dans la liste LN est donc redirigée vers le serveur SV. De plus, la plateforme PF détermine également en 33 qu'un autre terminal est associé au terminal T21 de Bob, dans notre exemple le terminal T22, afin que ce terminal associé T22, et non le terminal T21, puisse recevoir un message de notification relatif à la redirection de l'appel d'Alice.

En 34, la plateforme PF émet donc une commande d'ouverture d'une session d'appel à destination du serveur vocal SV. Cela peut être réalisé directement si le serveur SV est connecté au même réseau que la plateforme PF, tel qu'illustré dans la figure, ou via un deuxième canal de communication reliant le serveur SV au réseau RT. Ladite commande comprend un identifiant d'appelé IPSV correspondant au serveur SV, et l'identifiant d'appelant IP1 correspondant à l'identifiant du terminal T1 d'Alice. Pour ce faire, elle émet un message SIP de type INVITE. Un tel message SIP est par exemple:
INVITE
From=IP1
To=IPSV
Diversion=IP21

Les étapes suivant l'étape 34, menant à l'établissement 52 de la session de communication entre le terminal T1 et le serveur vocal SV sont connues n'ont besoin d'être ni décrites ni illustrées.

Dans une variante préférée du procédé, l'étape d'établissement 52 déclenche l'émission en 35 par la plateforme PF d'un message de notification vers le terminal T22 associé au terminal T21. Le message de notification est reçu sur le terminal T22 par exemple par l'application logicielle du terminal T22 dédiée à la mise en œuvre du service de redirection.

Le message de notification peut comprendre des informations permettant à l'utilisateur du terminal T22 de prendre une décision sur l'ajout ou non de l'identifiant IP1 dans une liste blanche ou noire propre au terminal T21. Par exemple, le message de notification est une requête de type http post "appel inconnu de IP1 pour T21". Le message de notification peut être enrichi d'un message vocal laissé par Alice, ou d'une transcription textuelle faite à partir du message vocal, ou d'informations obtenues par le serveur SV suite à un échange interactif entre le serveur SV et le terminal T1 d'Alice. Dans ce cas, le serveur émet auparavant une notification similaire à destination de la plateforme PF (non illustrée).

Alternativement, le message de notification peut ne comprendre qu'une information indiquant qu'un message d'un terminal inconnu a été déposé à l'intention du terminal T21 sur le serveur SV. Dans ce cas, le terminal T22 prend l'initiative, à un moment ultérieur choisi par son utilisateur, de consulter le serveur SV fonctionnant comme une messagerie vocale classique consultable à distance.

Dans une autre variante, non illustrée, il n'y a pas d'étape 35, et le terminal T22 ne reçoit pas de message de notification mais prend l'initiative, à un moment choisi par son utilisateur, de consulter le serveur SV fonctionnant comme une messagerie vocale classique consultable à distance, mais sans être certain qu'un message y a été déposé.

Une fois qu'il a pris connaissance des informations nécessaires, l'utilisateur du terminal T22, qui peut être Bob ou une autre personne mandatée par Bob, décide que l'appel d'Alice vers Bob aurait dû être autorisé, ou bloqué, lors d'une étape 43 identique au premier mode de réalisation.

Les étapes suivantes, 44, 25, 26 et 27, sont identiques à celles du premier mode de réalisation présenté en relation avec la figure 2, et ne seront pas décrites à nouveau.

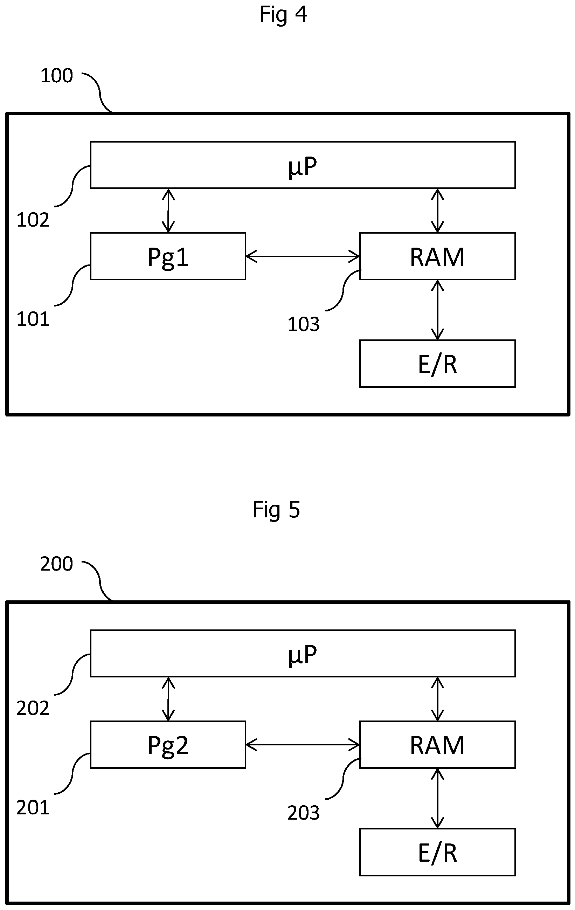

On présente maintenant, en relation avec la **figure 4****,** la structure matérielle d'un dispositif 100 de redirection d'une requête de communication émise par un terminal dit terminal appelant, à destination d'un terminal dit terminal appelé, un identifiant du terminal appelant étant absent d'une liste d'identifiants de terminaux appelants pour lesquels l'établissement d'une communication avec le terminal appelé est autorisé ou interdit, respectivement dite liste blanche ou liste noire, le dispositif comprenant un récepteur, un émetteur, un processeur et une mémoire couplée au processeur avec des instructions destinées à être exécutées par le processeur pour :
- la redirection de la requête de communication vers un terminal associé au terminal appelé, distinct du terminal appelé, dit terminal de redirection,
- la réception d'un message d'instruction, comprenant l'identifiant du terminal appelant et une instruction relative à la liste blanche ou à la liste noire,
- en fonction de l'instruction reçue, l'ajout de l'identifiant du terminal appelant à la liste blanche ou à la liste noire.

Plus généralement, un tel dispositif 100 comprend une mémoire vive 103 (par exemple une mémoire RAM), une unité de traitement 102 équipée par exemple d'un processeur, et pilotée par un programme d'ordinateur Pg1, représentatif d'un module de redirection de la requête de communication vers un terminal associé au terminal appelé, distinct du terminal appelé, dit terminal de redirection, d'un module de réception d'un message d'instruction, comprenant l'identifiant du terminal appelant et une instruction relative à la liste blanche ou à la liste noire, d'un module d'ajout, en fonction de l'instruction reçue, de l'identifiant du terminal appelant à la liste blanche ou à la liste noire, le programme étant stocké dans une mémoire morte 101 (par exemple une mémoire ROM ou un disque dur). Avantageusement, le programme d'ordinateur Pg1 est également représentatif d'un module d'émission d'un message de notification vers un autre terminal associé au terminal appelé, dit terminal associé, distinct à la fois du terminal appelé et du terminal de redirection, le message de notification comprenant au moins une information relative à la redirection, d'un module de réception d'un identifiant du terminal associé, et d'un module d'émission vers le terminal appelant d'une notification relative à l'ajout à la liste blanche ou à la liste noire de l'identifiant du terminal appelant.

A l'initialisation, les instructions de code du programme d'ordinateur sont par exemple chargées dans la mémoire vive 103 avant d'être exécutées par le processeur de l'unité de traitement 102. La mémoire vive 103 contient par exemple les valeurs d'identifiants de terminaux de la liste blanche et de la liste noire.

La figure 4 illustre seulement une manière particulière, parmi plusieurs possibles, de réaliser le dispositif de redirection 100, afin qu'il effectue les étapes du procédé de redirection tel que détaillé ci-dessus, en relation avec les figures 1 à 3 dans ses différents modes de réalisation. En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif 100 est réalisé avec une machine de calcul reprogrammable, le programme correspondant (c'est-à-dire la séquence d'instructions) pourra être stocké dans un médium de stockage amovible (tel que par exemple une clé USB, une disquette, un CD-ROM ou un DVD-ROM) ou non, ce médium de stockage étant lisible partiellement ou totalement par un ordinateur ou un processeur.

Les différents modes de réalisation ont été décrits ci-avant en relation avec un dispositif 100 qui est intégré à une plateforme de redirection PF du réseau de communication RT. Dans une variante plus générale, ne faisant pas parti de l'invention, le dispositif 100 peut être intégré dans n'importe quel équipement serveur de ce réseau, soit être intégré dans un terminal d'utilisateur sous la forme d'une application mobile installée dans le terminal appelé.

On présente maintenant, en relation avec la **figure 5****,** la structure matérielle d'un dispositif 200 de qualification d'une requête de communication émise par un terminal dit terminal appelant, à destination d'un terminal dit terminal appelé, un identifiant du terminal appelant étant absent d'une liste d'identifiants de terminaux appelants pour lesquels l'établissement d'une communication avec le terminal appelé est autorisé ou interdit, respectivement dite liste blanche ou liste noire, le dispositif comprenant un récepteur, un émetteur, un processeur et une mémoire couplée au processeur avec des instructions destinées à être exécutées par le processeur pour :
- l'établissement de la requête de communication entre le terminal appelant et un terminal d'utilisateur, distinct du terminal appelé, dit terminal de redirection, après redirection de la requête vers le terminal de redirection,
- l'émission d'un message d'instruction, comprenant l'identifiant du terminal appelant et une instruction relative à la liste blanche ou à la liste noire.

Plus généralement, un tel dispositif 200 comprend une mémoire vive 203 (par exemple une mémoire RAM), une unité de traitement 202 équipée par exemple d'un processeur, et pilotée par un programme d'ordinateur Pg2, représentatif d'un module de qualification de la requête de communication vers un terminal associé au terminal appelé, distinct du terminal appelé, dit terminal de redirection, d'un module d'émission d'un message d'instruction, comprenant l'identifiant du terminal appelant et une instruction relative à la liste blanche ou à la liste noire, le programme étant stocké dans une mémoire morte 201 (par exemple une mémoire ROM ou un disque dur).

Avantageusement, le programme d'ordinateur Pg2 est également représentatif d'un module d'obtention d'un identifiant du terminal appelé.

A l'initialisation, les instructions de code du programme d'ordinateur sont par exemple chargées dans la mémoire vive 203 avant d'être exécutées par le processeur de l'unité de traitement 202.

La figure 5 illustre seulement une manière particulière, parmi plusieurs possibles, de réaliser le dispositif de qualification 200, afin qu'il effectue les étapes du procédé de qualification tel que détaillé ci-dessus, en relation avec les figures 1 à 3 dans ses différents modes de réalisation. En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif 200 est réalisé avec une machine de calcul reprogrammable, le programme correspondant (c'est-à-dire la séquence d'instructions) pourra être stocké dans un médium de stockage amovible (tel que par exemple une clé USB, une disquette, un CD-ROM ou un DVD-ROM) ou non, ce médium de stockage étant lisible partiellement ou totalement par un ordinateur ou un processeur.

Les différents modes de réalisation ont été décrits ci-avant en relation avec un dispositif 200 qui peut être intégré dans un terminal d'utilisateur sous la forme d'une application mobile installée dans le terminal de redirection.

Les fonctions qui viennent d'être décrites, réalisées par le dispositif de redirection ou par le dispositif qualification, peuvent être réparties sur plusieurs équipements ou sur plusieurs modules d'un même équipement, comprenant par exemple un premier équipement (ou module) réalisant l'interface avec des utilisateurs et un deuxième équipement (ou module) réalisant l'interface avec le réseau de téléphonie, le premier équipement (ou module) et le deuxième équipement (ou module) étant agencés pour communiquer entre eux via une interface dédiée.

Le terme "module" peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions. Les modules d'émission et/ou de réception sont schématisés dans la figure par un module E/R mais peuvent être séparés.

L'invention qui vient d'être décrite dans ses différents modes de réalisation, grâce au procédé et au dispositif de redirection, permet une gestion efficace d'une liste blanche ou noire associée à un terminal sans que l'utilisateur de ce terminal ne soit sollicité à aucun moment, directement sur son terminal. De plus, l'invention garantit deux effets jusque-là rarement obtenus ensemble, c'est-à-dire d'une part que tous les appels sollicités puissent être reçus sur le terminal, et d'autre part qu'aucun appel non sollicité ne soit reçu sur ce même terminal.

## Revendications

1. **Procédé** de redirection d'une requête de communication émise par un terminal dit terminal appelant (T1), à destination d'un terminal dit terminal appelé (T21), un identifiant du terminal appelant étant absent d'une liste d'identifiants de terminaux appelants pour lesquels l'établissement d'une communication avec le terminal appelé est autorisé ou interdit, respectivement dite liste blanche ou liste noire, le procédé étant mis en œuvre par une plateforme de redirection (PF) et comprenant :
• une redirection (24) de la requête de communication vers un terminal d'utilisateur, distinct du terminal appelé, dit terminal de redirection (T22), le terminal de redirection (T22) étant un terminal choisi à l'avance par l'utilisateur du terminal appelé (T21), distinct du terminal appelé (T21),
• une réception (25) en provenance du terminal de redirection d'un message d'instruction, comprenant l'identifiant du terminal appelant et une instruction relative à la liste blanche ou à la liste noire,
• en fonction de l'instruction reçue, un ajout (26) de l'identifiant du terminal appelant à la liste blanche ou à la liste noire.

2. **Procédé** de redirection d'une requête de communication selon la revendication 1, où le terminal de redirection est sélectionné parmi un groupe de terminaux de redirection en fonction de critères prédéterminés.

3. **Procédé** de redirection d'une requête de communication selon l'une des revendications 1 à 2, comprenant une étape préalable d'obtention d'un identifiant du terminal de redirection.

4. **Procédé** de redirection d'une requête de communication selon l'une des revendications 1 à 3, où le terminal de redirection est le terminal d'une tierce personne mandatée par l'utilisateur du terminal appelé.

5. **Procédé** de redirection d'une requête de communication selon l'une des revendications précédentes, comprenant une émission vers le terminal appelant d'une notification relative à l'ajout à la liste blanche ou à la liste noire de l'identifiant du terminal appelant.

6. **Procédé** de qualification d'une requête de communication émise par un terminal dit terminal appelant (T1), à destination d'un terminal dit terminal appelé (T21), un identifiant du terminal appelant étant absent d'une liste d'identifiants de terminaux appelants pour lesquels l'établissement d'une communication avec le terminal appelé est autorisé ou interdit, respectivement dite liste blanche ou liste noire, la communication étant établie (42) par une plateforme de redirection (PF) entre le terminal appelant et un terminal d'utilisateur, distinct du terminal appelé, dit terminal de redirection (T22), après redirection de la requête vers le terminal de redirection, le procédé étant mis en oeuvre par le terminal de redirection (T22) qui est un terminal choisi à l'avance par l'utilisateur du terminal appelé (T21), et comprenant :
• une obtention d'un identifiant du terminal appelé,
• une décision (43) relative à l'ajout de l'identifiant du terminal appelant à la liste blanche ou à la liste noire,
• une émission (44) d'un message d'instruction vers la plateforme de redirection (PF), comprenant l'identifiant du terminal appelant et une instruction relative à la décision.

7. **Dispositif** de redirection dans une plateforme de redirection (PF) d'une requête de communication émise par un terminal dit terminal appelant (T1), à destination d'un terminal dit terminal appelé (T21), un identifiant du terminal appelant étant absent d'une liste d'identifiants de terminaux appelants pour lesquels l'établissement d'une communication avec le terminal appelé est autorisé ou interdit, respectivement dite liste blanche ou liste noire, le dispositif comprenant un récepteur, un émetteur, un processeur et une mémoire couplée au processeur avec des instructions destinées à être exécutées par le processeur pour :
• une redirection de la requête de communication vers un terminal d'utilisateur, distinct du terminal appelé, dit terminal de redirection (T22), le terminal de redirection (T22) étant un terminal choisi à l'avance par l'utilisateur du terminal appelé (T21), distinct du terminal appelé (T21),
• une réception en provenance du terminal de redirection d'un message d'instruction, comprenant l'identifiant du terminal appelant et une instruction relative à la liste blanche ou à la liste noire,
• en fonction de l'instruction reçue, un ajout de l'identifiant du terminal appelant à la liste blanche ou à la liste noire.

8. **Système, comprenant une plateforme de redirection (PF) et un terminal de redirection (T22),** de qualification d'une requête de communication émise par un terminal dit terminal appelant (T1), à destination d'un terminal dit terminal appelé (T21), un identifiant du terminal appelant étant absent d'une liste d'identifiants de terminaux appelants pour lesquels l'établissement d'une communication avec le terminal appelé est autorisé ou interdit, respectivement dite liste blanche ou liste noire, la communication étant établie par la plateforme de redirection (PF) entre le terminal appelant et un terminal d'utilisateur, distinct du terminal appelé, à savoir ledit terminal de redirection (T22), choisi à l'avance par l'utilisateur du terminal appelé (T21), après redirection de la requête vers le terminal de redirection, le terminal de redirection (T22) comprenant un récepteur, un émetteur, un processeur et une mémoire couplée au processeur avec des instructions destinées à être exécutées par le processeur pour :
• une obtention d'un identifiant du terminal appelé,
• une décision relative à l'ajout de l'identifiant du terminal appelant à la liste blanche ou à la liste noire,
• une émission d'un message d'instruction vers la plateforme de redirection (PF), comprenant l'identifiant du terminal appelant et une instruction relative à la décision.

9. **Programme d'ordinateur,** comprenant des instructions qui, lorsque ces instructions sont exécutées par un processeur d'un dispositif de redirection selon la revendication 7, conduisent celui-ci à mettre en œuvre les étapes du procédé de redirection d'une requête de communication, selon l'une des revendications 1 à 5.

10. **Support d'informations** lisible par un ordinateur, et comportant des instructions d'un programme d'ordinateur conforme à la revendication 9.

11. **Programme d'ordinateur,** comprenant des instructions qui, lorsque ces instructions sont exécutées par un processeur d'un système de qualification selon la revendication 8, conduisent celui-ci à mettre en œuvre les étapes du procédé de qualification d'une requête de communication, selon la revendication 6.

12. **Support d'informations** lisible par un ordinateur, et comportant des instructions d'un programme d'ordinateur conforme à la revendication 11.

## Patentansprüche

1. Verfahren zur Umleitung einer Verbindungsanforderung, die von einem Endgerät, rufendes Endgerät (T1) genannt, an ein Endgerät, gerufenes Endgerät (T21) genannt, gesendet wird, wobei eine Kennung des rufenden Endgeräts in einer Liste mit Kennungen rufender Endgeräte, für welche der Aufbau einer Verbindung zu dem gerufenen Endgerät erlaubt oder verboten ist, weiße Liste bzw. schwarze Liste genannt, fehlt, wobei das Verfahren von einer Umleitungsplattform (PF) durchgeführt wird und umfasst:
• ein Umleiten (24) der Verbindungsanforderung zu einem Benutzerendgerät, das von dem gerufenen Endgerät verschieden ist, Umleitungsendgerät (T22) genannt, wobei das Umleitungsendgerät (T22) ein von dem Benutzer des gerufenen Endgeräts (T21) im Voraus ausgewähltes Endgerät ist, das von dem gerufenen Endgerät (T21) verschieden ist,
• ein Empfangen (25), von dem Umleitungsendgerät, einer Anweisungsnachricht, welche die Kennung des rufenden Endgeräts und eine Anweisung bezüglich der weißen Liste oder der schwarzen Liste umfasst,
• in Abhängigkeit von der empfangenen Anweisung ein Hinzufügen (26) der Kennung des rufenden Endgeräts zu der weißen Liste oder zu der schwarzen Liste.

2. Verfahren zur Umleitung einer Verbindungsanforderung nach Anspruch 1, wobei das Umleitungsendgerät in Abhängigkeit von vorbestimmten Kriterien aus einer Gruppe von Umleitungsendgeräten ausgewählt wird.

3. Verfahren zur Umleitung einer Verbindungsanforderung nach einem der Ansprüche 1 bis 2, umfassend einen vorherigen Schritt des Erhaltens einer Kennung des Umleitungsendgeräts.

4. Verfahren zur Umleitung einer Verbindungsanforderung nach einem der Ansprüche 1 bis 3, wobei das Umleitungsendgerät das Endgerät einer dritten Person ist, die von dem Benutzer des gerufenen Endgeräts beauftragt wird.

5. Verfahren zur Umleitung einer Verbindungsanforderung nach einem der vorhergehenden Ansprüche, umfassend ein Senden, zu dem rufenden Endgerät, einer Benachrichtigung bezüglich des Hinzufügens der Kennung des rufenden Endgeräts zu der weißen Liste oder zu der schwarzen Liste.

6. Verfahren zur Qualifizierung einer Verbindungsanforderung, die von einem Endgerät, rufendes Endgerät (T1) genannt, an ein Endgerät, gerufenes Endgerät (T21) genannt, gesendet wird, wobei eine Kennung des rufenden Endgeräts in einer Liste mit Kennungen rufender Endgeräte, für welche der Aufbau einer Verbindung zu dem gerufenen Endgerät erlaubt oder verboten ist, weiße Liste bzw. schwarze Liste genannt, fehlt, wobei die Verbindung von einer Umleitungsplattform (PF) zwischen dem rufenden Endgerät und einem Benutzerendgerät, das von dem gerufenen Endgerät verschieden ist, Umleitungsendgerät (T22) genannt, nach der Umleitung der Anforderung zu dem Umleitungsendgerät aufgebaut wird (42), wobei das Verfahren von dem Umleitungsendgerät (T22) durchgeführt wird, das ein von dem Benutzer des gerufenen Endgeräts (T21) im Voraus ausgewähltes Endgerät ist, und umfassend:
• ein Erhalten einer Kennung des gerufenen Endgeräts,
• eine Entscheidung (43) bezüglich des Hinzufügens der Kennung des rufenden Endgeräts zu der weißen Liste oder zu der schwarzen Liste,
• ein Senden (44) einer Anweisungsnachricht zu der Umleitungsplattform (PF), umfassend die Kennung des rufenden Endgeräts und eine Anweisung bezüglich der Entscheidung.

7. Vorrichtung zur Umleitung, in einer Umleitungsplattform (PF), einer Verbindungsanforderung, die von einem Endgerät, rufendes Endgerät (T1) genannt, an ein Endgerät, gerufenes Endgerät (T21) genannt, gesendet wird, wobei eine Kennung des rufenden Endgeräts in einer Liste mit Kennungen rufender Endgeräte, für welche der Aufbau einer Verbindung zu dem gerufenen Endgerät erlaubt oder verboten ist, weiße Liste bzw. schwarze Liste genannt, fehlt, die Vorrichtung umfassend einen Empfänger, einen Sender, einen Prozessor und einen mit dem Prozessor gekoppelten Speicher mit Anweisungen, die dazu bestimmt sind, von dem Prozessor ausgeführt zu werden für:
• ein Umleiten der Verbindungsanforderung zu einem Benutzerendgerät, das verschieden von dem gerufenen Endgerät ist, Umleitungsendgerät (T22) genannt, wobei das Umleitungsendgerät (T22) ein von dem Benutzer des gerufenen Endgeräts (T21) im Voraus ausgewähltes Endgerät ist, das von dem gerufenen Endgerät (T21) verschieden ist,
• ein Empfangen, von dem Umleitungsendgerät, einer Anweisungsnachricht, welche die Kennung des rufenden Endgeräts und eine Anweisung bezüglich der weißen Liste oder der schwarzen Liste umfasst,
• in Abhängigkeit von der empfangenen Anweisung, ein Hinzufügen der Kennung des rufenden Endgeräts zu der weißen Liste oder zu der schwarzen Liste.

8. System, umfassend eine Umleitungsplattform (PF) und ein Umleitungsendgerät (T22), zur Qualifizierung einer Verbindungsanforderung, die von einem Endgerät, rufendes Endgerät (T1) genannt, an ein Endgerät, gerufenes Endgerät (T21) genannt, gesendet wird, wobei eine Kennung des rufenden Endgeräts in einer Liste mit Kennungen rufender Endgeräte, für welche der Aufbau einer Verbindung zu dem gerufenen Endgerät erlaubt oder verboten ist, weiße Liste bzw. schwarze Liste genannt, fehlt, wobei die Verbindung von der Umleitungsplattform (PF) zwischen dem rufenden Endgerät und einem Benutzerendgerät, das von dem gerufenen Endgerät verschieden ist, d. h. dem Umleitungsendgerät (T22), das von dem Benutzer des gerufenen Endgeräts (T21) im Voraus ausgewählt wird, nach dem Umleiten der Anforderung zu dem Umleitungsendgerät aufgebaut wird, das Umleitungsendgerät (T22) umfassend einen Empfänger, einen Sender, einen Prozessor und einen mit dem Prozessor gekoppelten Speicher mit Anweisungen, die dazu bestimmt sind, von dem Prozessor ausgeführt zu werden für:
• ein Erhalten einer Kennung des gerufenen Endgeräts,
• eine Entscheidung bezüglich des Hinzufügens der Kennung des rufenden Endgeräts zu der weißen Liste oder zu der schwarzen Liste,
• ein Senden einer Anweisungsnachricht zu der Umleitungsplattform (PF), umfassend die Kennung des rufenden Endgeräts und eine Anweisung bezüglich der Entscheidung.

9. Computerprogramm, das Anweisungen umfasst, die, wenn diese Anweisungen durch einen Prozessor einer Umleitungsvorrichtung nach Anspruch 7 ausgeführt werden, diese veranlassen, die Schritte des Verfahrens zur Umleitung einer Verbindungsanforderung nach einem der Ansprüche 1 bis 5 durchzuführen.

10. Datenträger, der von einem Computer gelesen werden kann und Anweisungen eines Computerprogramms nach Anspruch 9 umfasst.

11. Computerprogramm, das Anweisungen umfasst, die, wenn diese Anweisungen durch einen Prozessor eines Systems zur Qualifizierung nach Anspruch 8 ausgeführt werden, dieses veranlassen, die Schritte des Verfahrens zur Qualifizierung einer Verbindungsanforderung nach Anspruch 6 durchzuführen.

12. Datenträger, der von einem Computer gelesen werden kann und Anweisungen eines Computerprogramms nach Anspruch 11 umfasst.

## Claims

1. Method for redirecting a communication request sent by a terminal referred to as the caller terminal (T1) to a terminal referred to as the called terminal (T21), an identifier of the caller terminal being absent from a list of identifiers of caller terminals for which the establishment of a communication with the called terminal is authorized or blocked, referred to as a white list or black list, respectively, the method being implemented by a redirection platform (PF) and comprising:
• redirecting (24) the communication request to a user terminal, distinct from the called terminal, referred to as the redirection terminal (T22), the redirection terminal (T22) being a terminal chosen in advance by the user of the called terminal (T21), distinct from the called terminal (T21),
• receiving (25) from the redirection terminal an instruction message, comprising the identifier of the caller terminal and an instruction relating to the white list or to the black list,
• depending on the instruction received, adding (26) the identifier of the caller terminal to the white list or to the black list.

2. Method for redirecting a communication request according to Claim 1, where the redirection terminal is selected from a group of redirection terminals according to predetermined criteria.

3. Method for redirecting a communication request according to either of Claims 1 and 2, comprising a prior step of obtaining an identifier of the redirection terminal.

4. Method for redirecting a communication request according to one of Claims 1 to 3, where the redirection terminal is the terminal of a third party appointed by the user of the called terminal.

5. Method for redirecting a communication request according to one of the preceding claims, comprising sending, to the caller terminal, a notification relating to the addition, to the white list or to the black list, of the identifier of the caller terminal.

6. Method for qualifying a communication request sent by a terminal referred to as the caller terminal (T1) to a terminal referred to as the called terminal (T21), an identifier of the caller terminal being absent from a list of identifiers of caller terminals for which the establishment of a communication with the called terminal is authorized or blocked, referred to as a white list or black list, respectively, the communication being established (42) by a redirection platform (PF) between the caller terminal and a user terminal, distinct from the called terminal, referred to as the redirection terminal (T22), after redirection of the request to the redirection terminal, the method being implemented by the redirection terminal (T22), which is a terminal chosen in advance by the user of the called terminal (T21), and comprising:
• obtaining an identifier of the called terminal,
• making a decision (43) relating to the addition of the identifier of the caller terminal to the white list or to the black list,
• sending (44) an instruction message to the redirection platform (PF), comprising the identifier of the caller terminal and an instruction relating to the decision.

7. Device for redirecting, in a redirection platform (PF), a communication request sent by a terminal referred to as the caller terminal (T1) to a terminal referred to as the called terminal (T21), an identifier of the caller terminal being absent from a list of identifiers of caller terminals for which the establishment of a communication with the called terminal is authorized or blocked, referred to as a white list or black list, respectively, the device comprising a receiver, a transmitter, a processor and a memory coupled to the processor with instructions intended to be executed by the processor for:
• redirecting the communication request to a user terminal, distinct from the called terminal, referred to as the redirection terminal (T22), the redirection terminal (T22) being a terminal chosen in advance by the user of the called terminal (T21), distinct from the called terminal (T21),
• receiving from the redirection terminal an instruction message, comprising the identifier of the caller terminal and an instruction relating to the white list or to the black list,
• depending on the instruction received, adding the identifier of the caller terminal to the white list or to the black list.

8. System, comprising a redirection platform (PF) and a redirection terminal (T22), for qualifying a communication request sent by a terminal referred to as the caller terminal (T1) to a terminal referred to as the called terminal (T21), an identifier of the caller terminal being absent from a list of identifiers of caller terminals for which the establishment of a communication with the called terminal is authorized or blocked, referred to as a white list or black list, respectively, the communication being established by the redirection platform (PF) between the caller terminal and a user terminal, distinct from the called terminal, namely said redirection terminal (T22), chosen in advance by the user of the called terminal (T21), after redirection of the request to the redirection terminal, the redirection terminal (T22) comprising a receiver, a transmitter, a processor and a memory coupled to the processor with instructions intended to be executed by the processor for:
• obtaining an identifier of the called terminal,
• making a decision relating to the addition of the identifier of the caller terminal to the white list or to the black list,
• sending an instruction message to the redirection platform (PF), comprising the identifier of the caller terminal and an instruction relating to the decision.

9. Computer program, comprising instructions which, when these instructions are executed by a processor of a redirection device according to Claim 7, result in it implementing the steps of the method for redirecting a communication request according to one of Claims 1 to 5.

10. Information medium that is readable by a computer, and comprises instructions of a computer program according to Claim 9.

11. Computer program, comprising instructions which, when these instructions are executed by a processor of a qualification system according to Claim 8, result in it implementing the steps of the method for qualifying a communication request according to Claim 6.

12. Information medium that is readable by a computer, and comprises instructions of a computer program according to Claim 11.
